(19) **Europäisches Patentamt**
**European Patent Office**
**Office européen des brevets**

(11) **EP 1 675 336 B1**

(12) **EUROPEAN PATENT SPECIFICATION**

(45) Date of publication and mention
of the grant of the patent:
**19.09.2007 Bulletin 2007/38**

(51) Int Cl.:
*H04L 25/02* $^{(2006.01)}$     *H04L 27/26* $^{(2006.01)}$

(21) Application number: **05028115.3**

(22) Date of filing: **21.12.2005**

(54) **Apparatus and method for performing pilot-aided channel estimation in time axis in an OFDM communication system**

Einrichtung und Verfahren zur pilotgestützten Kanalschätzung in Zeitachse in einem OFDM Kommunikationssystem

Dispositif et procédé pour l'estimation de canal assistée par pilote le long d'un axe des temps dans un système MROF

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2004 KR 2004109955**

(43) Date of publication of application:
**28.06.2006 Bulletin 2006/26**

(73) Proprietor: **Samsung Electronics Co., Ltd.**
Suwon-si, Gyeonggi-Do (KR)

(72) Inventors:
• **Lee, Seo-Goo**
Samsung Electronics Co., Ltd.
Suwon-si
Gyeonggi-do (KR)
• **Park, Min-Cheol**
Samsung Electronics Co., Ltd.
Suwon-si
Gyeonggi-do (KR)
• **Park, Yun-Sang**
Samsung Electronics Co., Ltd.
Suwon-si
Gyeonggi-do (KR)
• **Song, Bong-Gee**
Samsung Electronics Co., Ltd.
Suwon-si
Gyeonggi-do (KR)

(74) Representative: **Grünecker, Kinkeldey, Stockmair & Schwanhäusser**
**Anwaltssozietät**
**Maximilianstrasse 58**
**80538 München (DE)**

(56) References cited:
• **BATARIERE M D ET AL: "Low-complexity technique to increase capacity of mobile broadband systems" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 May 2004 (2004-05-17), pages 1939-1943, XP010766500 ISBN: 0-7803-8255-2**
• **SPETH M ET AL: "Broadband transmission using OFDM: system performance and receiver complexity" BROADBAND COMMUNICATIONS, 1998. ACCESSING, TRANSMISSION, NETWORKING. PROCEEDINGS. 1998 INTERNATIONAL ZURICH SEMINAR ON ZURICH, SWITZERLAND 17-19 FEB. 1998, NEW YORK, NY, USA,IEEE, US, 17 February 1998 (1998-02-17), pages 99-104, XP010277003 ISBN: 0-7803-3893-6**
• **PEI-YUN TSAI ET AL: "Frequency-domain interpolation-based channel estimation in pilot-aided OFDM systems" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 1, 17 May 2004 (2004-05-17), pages 420-424Vol1, XP010764832 ISBN: 0-7803-8255-2**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**BACKGROUND OF THE INVENTION**

1. Field of the Invention

The present invention relates to apparatus and a method for performing time domain channel estimation.

2. Description of the Related Art

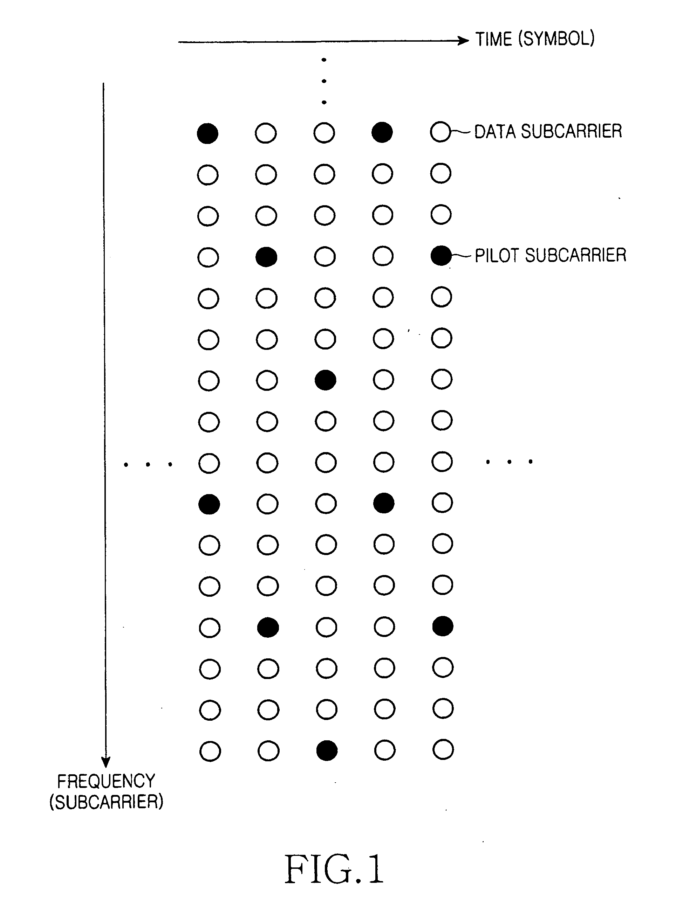

Orthogonal frequency division multiplexing (OFDM) scheme is a scheme for sending data in parallel using a plurality of subcarriers orthogonal to each other rather than a single carrier with a broad band. A communication system using the OFDM scheme (OFDM system) has a higher frequency efficiency and transmission rate than a communication system using a single carrier. The receiving side of the OFDM system needs to compensate for channel distortion of OFDM symbols (hereinafter, referred to as "symbol") due to channel environments by estimating characteristics of the transmission channel, and compensates for symbol channel distortion.
More specifically, when the OFDM system is used to provide wireless Internet service, and the radio channel is time-varying, in this case, the channel estimation system is designed to continuously track the time-varying channel. To estimate the time-varying channel, the transmitting side sends pilot signals known by the receiving side through pilot subcarriers that are assigned to some subcarriers in a symbol. Then, the receiving side performs channel estimation for a subcarrier by which data is actually transmitted, through interpolation using the pilot signals.
Various techniques are used to assign a pilot in OFDM. Conventionally, the OFDM system periodically assigns and arranges a pilot within one symbol such that it is robust to frequency selectivity of a radio channel. The OFDM symbol structure is capable of estimating characteristics of a time-varying radio channel by periodically assigning a pilot in the time domain. An example of the symbol structure is illustrated in FIG. 1.
In the symbol structure of FIG. 1, pilots are assigned for predetermined number of symbols with respect to defined subcarriers. The position of a pilot subcarrier between the subcarriers is shifted by a predetermined number of symbols, and a plurality of data subcarriers are positioned between adjacent pilot subcarriers on the time axis. FIG. 1 illustrates an example in which pilot subcarriers are assigned every three symbols on the time axis with respect to defined subcarriers, that is, subcarriers to which pilots are assigned every three subcarriers on the frequency axis, a position of a pilot subcarrier between the subcarriers is shifted in a unit of one symbol, and two data subcarriers are positioned between adjacent pilot subcarriers on the time axis. In FIG. 1, "•" denotes a pilot subcarrier used for transmitting a pilot, and "o" denotes a data subcarrier used for transmitting data.
When a pilot is assigned as illustrated in FIG. 1, channel estimation for a data subcarrier, which transmits actual data as opposed to a pilot, is achieved by performing interpolation using pilot subcarriers adjacent to the data subcarrier.
Before the channel estimation for a data subcarrier, channel estimation for the pilot subcarrier is done first. Conventionally, the channel estimation for a pilot subcarrier uses a least square (LS) technique or a linear minimum mean square estimation (LMMSE) technique. The LS technique performs channel estimation by dividing a signal of a received pilot subcarrier as a known signal at the receiving side. The LMMSE technique is a channel estimation technique which takes an additive white Gaussian noise (AWGN) component in a radio link into consideration. The LS technique has a relatively simple hardware structure, but its performance level is lower than the LMMSE channel estimation technique. The LMMSE technique performs excellently, but its hardware is very complex.
As described above, channel estimation for a data subcarrier is based mainly on interpolation using adjacent pilot subcarriers. The interpolation technique may be an interpolation filter-based technique, a polynomial interpolation technique, a Wiener filter-based MMSE technique, or etc. The polynomial interpolation technique is most common. First-order linear interpolation in the polynomial interpolation technique is advantageous for its simple hardware design.
In channel estimation for data subcarriers, interpolation is performed in both the time and frequency domains. The channel estimation for all subcarriers is achieved by first performing the time domain interpolation and subsequently performing the frequency domain interpolation. According to the time domain interpolation, channel values serving as channel transfer functions of data subcarriers between adjacent pilot subcarriers on the time axis, that is, the symbol axis, within one symbol duration are estimated. In this case, performance degradation due to characteristics of a time-varying radio channel can be minimized by time domain interpolation. Then, performance degradation due to frequency selectivity of a radio channel can be minimized by the frequency domain interpolation.

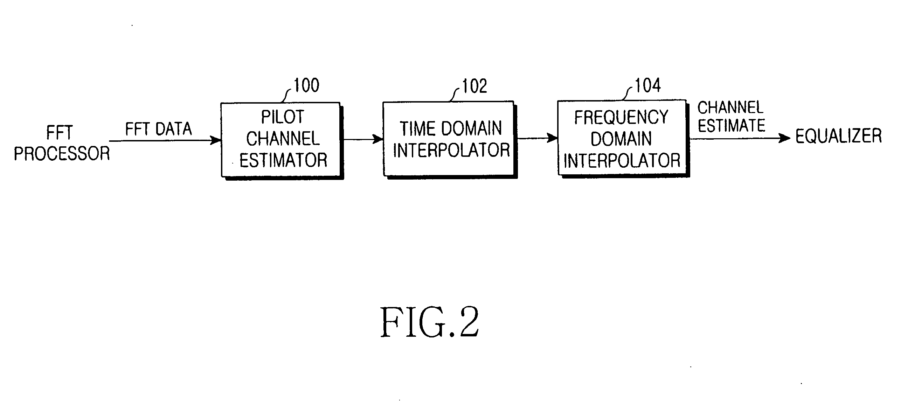

FIG. 2 is a block diagram illustrating a channel estimator for performing channel estimation in an OFDM system. The channel estimator includes a pilot channel estimator 100, a time domain interpolator 102, and a frequency domain interpolator 104. The pilot channel estimator 100 receives, from a fast Fourier transform (FFT) processor (not shown), FFT data.
The pilot channel estimator 100 performs channel estimation for pilot subcarriers using, for example, the above-mentioned LS technique. The pilot subcarrier channel estimation values are applied to the time domain interpolator 102.

Using the channel estimation values of the pilot subcarriers, the time domain interpolator 102 performs time domain interpolation for data subcarriers in one symbol, to generate channel estimation values for the data subcarriers. The time domain interpolator 102 outputs the generated channel estimation values of the data subcarriers to the frequency domain interpolator 104. The time domain interpolator 102 outputs, to the frequency domain interpolator 104, the channel estimation values of the pilot subcarriers input from the pilot channel estimator 100.

The frequency domain interpolator 104 receives the channel estimation values of the pilot and data subcarriers in one symbol input from the time domain interpolator 102, and performs frequency domain interpolation. When the frequency domain interpolator 104 completes channel estimation, the channel estimation values of the data subcarriers in one symbol are applied to an equalizer, and used to compensate for channel distortion of a corresponding symbol.

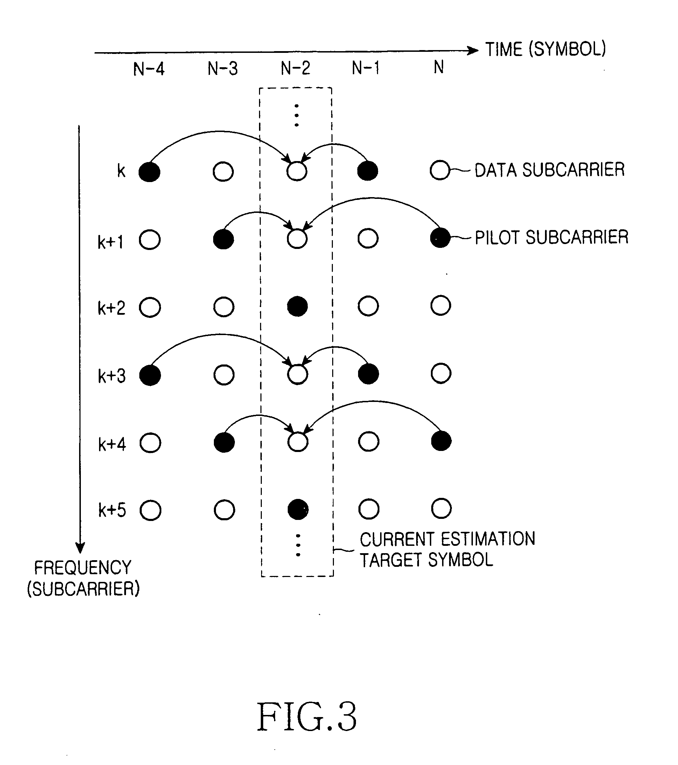

The time domain channel estimation in the time domain interpolator 102 will be described in detail with reference to FIG. 3, which illustrates subcarriers with pilots assigned every three symbols on the time axis. Because data subcarriers with no assigned pilot are directly associated with the frequency domain interpolation rather than the time domain interpolation, they are omitted from FIG. 3. In FIG. 3, N, N-1, N-2, N-3, and N-4 each indicate one symbol. FIG. 3 illustrates an example where symbols are input in order of $N - 4 \rightarrow N - 3 \rightarrow N - 2 \rightarrow N-1 \rightarrow N$. In FIG. 3, k, k+1, k+2, k+3, k+4, and k+5 denote subcarrier indices that respectively indicate one subcarrier to which pilots are assigned every three symbols from FIG. 1.

When an index of a symbol input into the channel estimator is N, the channel estimation is performed for the symbol of Index N-2 as illustrated in FIG. 3. That is, the (N-2)-th symbol is a current estimation target symbol. The time domain channel estimation for subcarriers in order of $k \rightarrow k + 1 \rightarrow k + 2 \rightarrow k + 3 \rightarrow k + 4 \rightarrow k + 5 \rightarrow \cdots$ in the (N-2)-th symbol is performed such that the frequency domain interpolator 104 performs the frequency domain channel estimation associated with the (N-2)-th symbol.

The time domain channel estimation for the k-th data subcarrier among subcarriers in the (N-2)-th symbol serving as the current estimation target symbol is performed by linearly interpolating channel estimation values of the k-th pilot subcarriers in the (N-4)-th and (N-1)-th symbols adjacent to the k-th data subcarrier in the (N-2)-th symbol. The time domain channel estimation for the (k+1)-th data subcarrier in the (N-2)-th symbol is performed by linearly interpolating channel estimation values of the (k+1)-th pilot subcarriers in the (N-3)-th and N-th symbols adjacent to the (k+1)-th data subcarrier in the (N-2)-th symbol. Because the (k+2)-th pilot subcarrier in the (N-2)-th symbol is a pilot subcarrier from which the channel estimate has already been computed , its time domain channel estimation is not necessary, and the channel estimation value of the (k+2)-th pilot subcarrier is output to the frequency domain interpolator 104 as it is.

The channel estimation for the remaining (k+3)-th, (k+4)-th, and (k+5)-th subcarriers in the (N-2)-th symbol, etc. is performed in the same way as that for the k-th, (k+1)-th, and (k+2)-th subcarriers in the (N-2)-th symbol.

In the linear interpolation for the above-mentioned time domain channel estimation, channel estimation values for the pilot subcarriers in five consecutive symbols of N-4 to N including the current estimation target symbol, are used during the process. To do so, the time domain interpolator 102 stores the signal values of the subcarriers in the five symbols in memory.

For example, assuming that the number of subcarriers in the OFDM system is 1,024, and a signal value of each subcarrier input into the channel estimator is 12-bit data in each of the in-phase (I) and Quadrature (Q) channels, the number of memory bits needed to perform the channel estimation associated with one symbol is 1,024 (subcarriers) $\times$ 12 (bits) $\times$ 2 (channels) $\times$ 5 (symbols) = 122,880 (bits). When three or more data subcarriers are positioned between adjacent pilot subcarriers along the time axis , additional memory for the data subcarrier is required.

Because the above-mentioned frequency domain interpolation in the OFDM system can be completely performed in one symbol regardless of adjacent symbols, it does not require large-scale memory. However, because time domain interpolation uses a plurality of symbols, it requires a large-scale memory. When hardware size is taken into account, the memory required to perform time domain interpolation has to be reduced to perform channel estimation efficiently.

Batariere M.D. et al, "Lower-complexity Technique to Increase Capacity of Mobile Broadband Systems", Vehicular Technology Conference, 2004. VTC 2004-Spring: 2004-IEEE 59th Milan, Italy, 17th to 19th May 2004, Peace Getaway, NJ, USA, IEEE, US, Volume 4, 17th May 2004, pages 1939 to 1943 discloses a pilot-plus-data aided channel estimation, wherein data is transmitted on $N_c$ subcarriers over an allocated bandwidth BW. The corresponding frame format is used for OFDM symbols. The position of pilot sub carriers is shifted in the unit of sub carriers. Channel estimation values of sub carriers are calculated. According to this disclosure, the average data rate of broadband systems is said to be increased. The corresponding receiver needs to perform extra interpolation and QPSK hard decision detection.

Speed M. et al, "Broadband Transmission Using OFDM: System Performance and Receiver Complexity", Broadband Communications, 1998, Accessing, Transmission, Networking, Proceedings, 1998, International Zurich Seminar in Zurich, Switzerland 17th to 19th February 1998, New York, NY, USA, IEEE, US, 17th February 1998, pages 99 to 104 discloses a structure of an OFDM system, wherein interpolation in time direction is emphasized, wherein samples from both past and future can be used for such interpolation.

## SUMMARY OF THE INVENTION

Therefore, it is an aspect of the present invention to provide an apparatus and method for performing time domain channel estimation in a communication system.

It is another aspect of the present invention to provide an apparatus and method for performing time domain channel estimation to reducethe memory required for performing time domain channel estimation in a communication system.

The above and other aspects of the present invention can be accomplished by inputting channel estimates of pilot subcarriers in a current input symbol, and linearly interpolating channel estimates of adjacent pilot subcarriers associated with each of the pilot subcarriers in the current input symbol during a time interval of the current input symbol to perform time domain channel estimation for data subcarriers positioned between the adjacent pilot subcarriers.

## BRIEF DESCRIPTION OF THE DRAWINGS

The above and other aspects and advantages of the present invention will be more clearly understood from the following detailed description taken in conjunction with the accompanying drawings, in which:

FIG. 1 illustrates an example of assigning an orthogonal frequency division multiplexing (OFDM) pilot subcarrier;

FIG. 2 is a block diagram illustrating a conventional OFDM channel estimator;

FIG. 3 illustrates an example of conventional linear interpolation in the time domain;

FIG. 4 is a block diagram illustrating a time domain channel estimator in accordance with an embodiment of the present invention;

FIG. 5 illustrates details of an interpolator in accordance with an embodiment of the present invention;

FIGS. 6A and 6B illustrate examples of linear interpolation in the time domain in accordance with an embodiment of the present invention;

FIG. 7 is a flow chart illustrating a time domain channel estimation procedure in accordance with an embodiment of the present invention;

FIGS. 8A and 8B illustrate examples of time domain linear interpolation in accordance with an alternative embodiment of the present invention; and

FIG. 9 is a flow chart illustrating a time domain channel estimation procedure in accordance with a further alternative embodiment of the present invention.

## DETAILED DESCRIPTION OF THE PREFERRED EMBODIMENTS

Preferred embodiments of the present invention will be described in detail herein below with reference to the accompanying drawings. In the following description, a detailed description of known functions and configurations incorporated herein will be omitted for conciseness. An example in which the present invention is applied to an orthogonal frequency division multiplexing (OFDM) system with the symbol structure of FIG. 1 will be described.

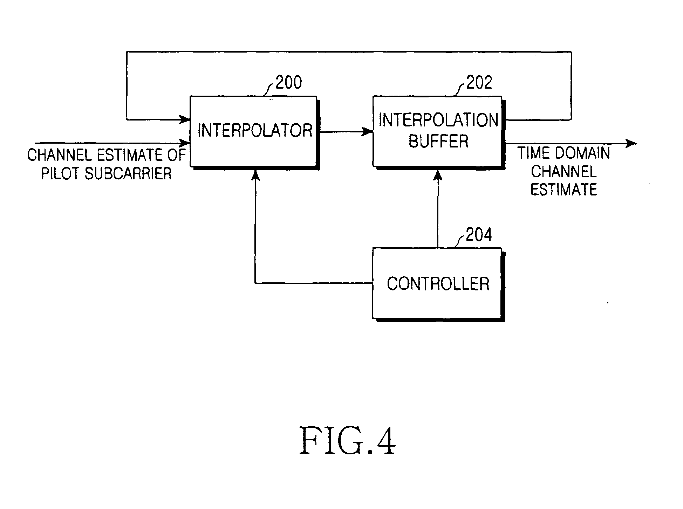

FIG. 4 is a block diagram of a time domain channel estimator in accordance with an embodiment of the present invention. The time domain channel estimator includes an interpolator 200, an interpolation buffer 202, and a controller 204. The time domain channel estimator of FIG. 4 corresponds to the time domain interpolator 102 of FIG. 2.

The interpolator 200 receives a channel estimation value of a current pilot subcarrier from the pilot channel estimator 100 of FIG. 2, and also receives a channel estimation value of a previous pilot subcarrier from the interpolation buffer 202. The term "current pilot subcarrier" refers to the pilot subcarrier associated with a current input channel estimate in a current input symbol. The term "previous pilot subcarrier" refers to the previous pilot subcarrier adjacent the current pilot subcarrier on the time axis. The interpolator 200 linearly interpolates the channel estimates of the current and previous pilot subcarriers. Then, the interpolator 200 generates channel estimation values of data subcarriers in the current and next estimation target symbols between the current and previous pilot subcarriers.

The interpolation buffer 202 preferably stores channel estimation values of pilot subcarriers in the current input symbol, channel estimation values of previous pilot subcarriers in the previous estimation symbol, channel estimation values of pilot subcarriers in the current estimation target symbol, and channel estimation values of data subcarriers in the next estimation target symbol.

The controller 204 controls linear interpolation in the interpolator 200, and controls storing and output operations in the interpolation buffer 202. The control is designed so that the time domain channel estimation for data subcarriers between the current and the previous pilot subcarriers is done during the current input symbol time interval.

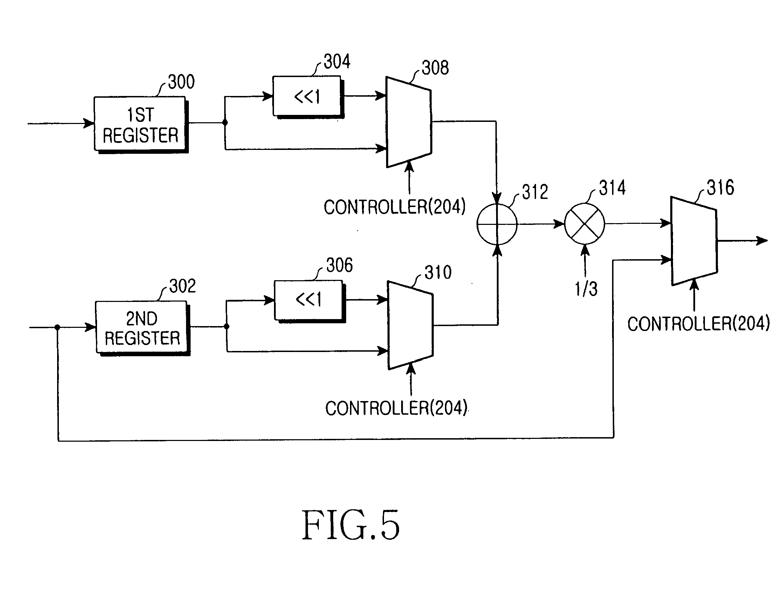

FIG. 5 illustrates details of the interpolator 200. A first register 300 receives and temporarily stores a channel estimation value of a previous pilot subcarrier from the interpolation buffer 202. A second register 302 receives and temporarily stores a channel estimation value of a current pilot subcarrier from the pilot channel estimator 100.

The channel estimation value of the previous pilot subcarrier temporarily stored in the first register 300 is doubled when a 1-bit shifter 304 shifts the channel estimation value by one to the more significant bit side. The original and doubled channel estimation value are input to the data selector 308. The data selector 308 selects either the output of the 1-bit shifter 304 (doubled channel estimation value) or the first register 300 (original channel estimation value) according to a control operation of the controller 204.

The channel estimation value of the current pilot subcarrier temporarily , is also doubled by a 1-bit shifter 306 in the same way. The original and doubled channel estimation value are input to the data selector 310. The data selector 310 selects either the output of the 1-bit shifter 306 or the second register 302 according to a control operation of the controller 204.

An adder 312 adds the outputs of the data selectors 308 and 310, and a multiplier 314 multiplies the sum by 1/3. The resulting product is then applied to a data selector 316. The data selector 316 selects either the resulting product from the multiplier 314 or the channel estimation value of the current pilot subcarrier stored in the second register 302 at the direction of the controller 204, and then sends the result to the interpolation buffer 202.

The time domain channel estimator of FIG. 4 performs time domain channel estimation for the data subcarriers between adjacent pilot subcarriers during a time interval of the current input symbol when performing channel estimation with linear interpolation. That is, in case of the symbol structure of FIG. 1, the time domain channel estimation is performed during the time interval of two symbols as illustrated in FIG. 3. However, in accordance with an embodiment of the present invention, time domain channel estimation is performed during the time interval of one symbol.

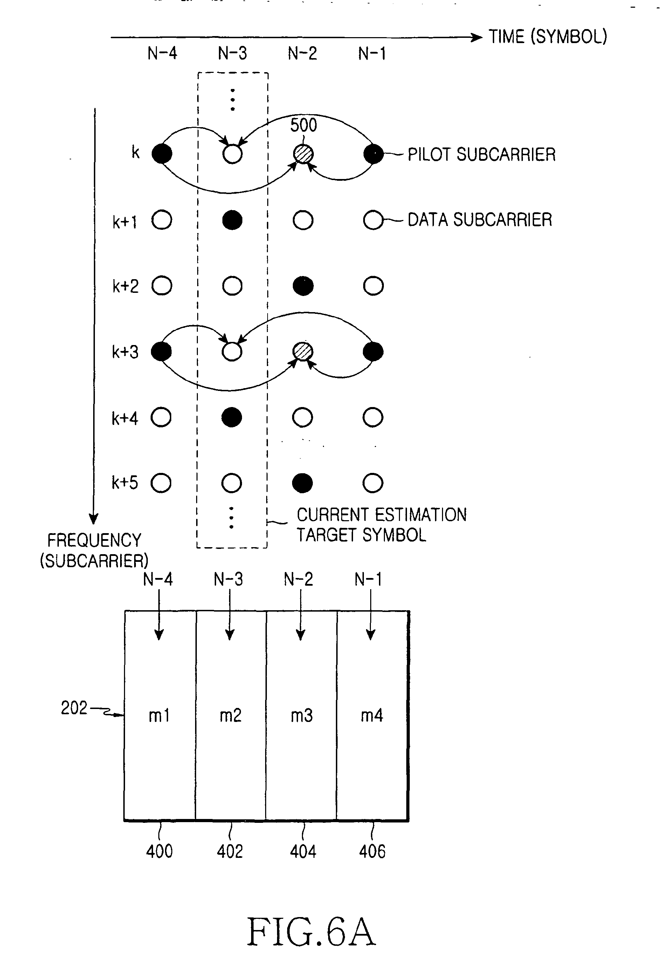

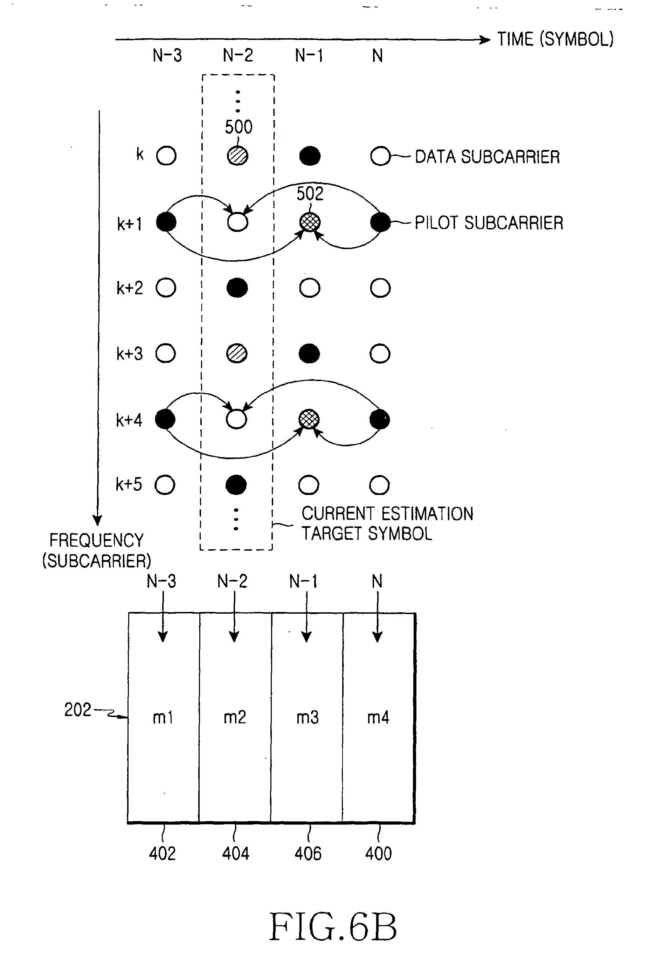

The above-mentioned time domain channel estimation is now be described with reference to FIGS. 6A and 6B to illustrate examples of linear interpolation in the time domain in accordance with an embodiment of the present invention.

Referring to FIG. 6A, when an index of a current symbol input into the channel estimator is N-1, frequency domain channel estimation associated with a symbol of Index N-3 is performed. That is, the (N-3)-th symbol is the current estimation target symbol.

The time domain channel estimation for a k-th data subcarrier among subcarriers in the (N-3)-th symbol (current estimation target symbol), is performed by linearly interpolating channel estimation values of k-th pilot subcarriers in the (N-4)-th and (N-1)-th symbols adjacent to the k-th data subcarrier in the (N-3)-th symbol on the time axis, as illustrated in Equation (1).

$$\widetilde{H}_k(N-3) = \frac{1}{3}\left\{2H_k(N-4) + H_k(N-1)\right\} \qquad \ldots\ldots(1)$$

where $H_k(N-4)$ is the channel estimation value of the k-th pilot subcarrier in the (N-4)-th symbol, $H_k(N-1)$ is the channel estimation value of the k-th pilot subcarrier in the (N-1)-th symbol, and $\widetilde{H}_k(N-3)$ is the time domain channel estimation value of the k-th data subcarrier in the (N-3)-th symbol.

Time domain channel estimation for a k-th data subcarrier 500 in the (N-2)-th symbol, which is the next estimation target symbol, is performed in advance by linearly interpolating the channel estimation values of the k-th pilot subcarriers in the (N-4)-th and (N-1)-th symbols according to Equation (2):

$$\widetilde{H}_k(N-2) = \frac{1}{3}\left\{H_k(N-4) + 2H_k(N-1)\right\} \qquad \ldots\ldots..(2)$$

where $H_k(N-4)$ is the channel estimation value of the k-th pilot subcarrier in the (N-4)-th symbol, $H_k(N-1)$ is the channel estimation value of the k-th pilot subcarrier in the (N-1)-th symbol, and $\widetilde{H}_k(N-2)$ is the time domain channel estimation value of the k-th data subcarrier in the (N-2)-th symbol.

The above Equations (1) and (2) illustrate linear interpolation computed by assigning weighting values according to intervals spaced between each of the k-th data subcarriers in the (N-3)-th and (N-2)-th symbols and the k-th pilot subcarriers in the (N-4)-th and (N-1)-th symbols adjacent thereto.

When linear interpolation is performed according to Equation (1), the controller 204 controls the data selector 308 to select an output of the 1-bit shifter 304 to multiply the channel estimation value $H_k(N-4)$ of the k-th pilot subcarrier in the (N-4)-th by 2. After that, because the output of the 1-bit shifter 304 is added to the channel estimation value $H_k(N-1)$ of the k-th pilot subcarrier in the (N-1)-th symbol, the controller 204 controls the data selector 310 to select an output of the second register 302. Next, the controller 204 controls the data selector 316 to select an output of the multiplier 314 to output the result of the linear interpolation according to Equation (1), i.e., the time domain channel estimation value $\tilde{H}_k$ ($N$ - 3) of the k-th data subcarrier in the (N-3)-th symbol.

When linear interpolation is performed according to the Equation (2), the controller 204 controls the data selector 310 to select an output of the 1-bit shifter 306 to multiply the channel estimation value $H_k(N-1)$ of the k-th pilot subcarrier in the (N-1)-th by 2. Then, to add the output of the 1-bit shifter 306 to the channel estimation value $H_k(N-4)$ of the k-th pilot subcarrier in the (N-4)-th symbol, the controller 204 controls the data selector 308 to select an output of the first register 300. After that, the controller 204 controls the data selector 316 to select an output of the multiplier 314 to output the result of the linear interpolation according to Equation (2), i.e., the time domain channel estimation value $\tilde{H}_k(N-2)$ of the k-th data subcarrier in the (N-2)-th symbol.

The time domain channel estimation value $\tilde{H}_k$ ($N$ - 3) of the k-th data subcarrier in the (N-3)-th symbol, computed as described above, is output to the frequency domain interpolator as is. However, if the (N-2)-th symbol is the current estimation target symbol in the next symbol input interval after the time domain channel estimation value $\tilde{H}_k(N$ - 2) of the k-th data subcarrier in the (N-2)-th symbol is stored in the interpolation buffer 202, it is output to the frequency domain interpolator in the k-th subcarrier position.

The time domain channel estimation for (k+3)-th and (k+6)-th subcarriers, etc. is preferably performed the same way as that for the k-th subcarrier in the (N-3)-th symbol.

After channel estimation in the (N-3)-th symbol is performed, channel estimation in the (N-2)-th symbol is performed. The channel estimation in the (N-2)-th symbol will be described with reference to FIG. 6B. When an index of a current symbol input into the channel estimator is N, frequency domain channel estimation associated with a symbol of Index N-2 is performed. That is, the (N-2)-th symbol is the current estimation target symbol.

Because time domain channel estimation for the k-th data subcarrier 500 among subcarriers in the (N-2)-th symbol (the current estimation target symbol) has already been performed at the time of channel estimation for the (N-3)-th symbol (the previous estimation target symbol) it is omitted. Since the channel estimation value of the k-th data subcarrier in the (N-2)-th symbol is done and stored in the interpolation buffer 202, it is obtained from the interpolation buffer 202 and sent to the frequency domain interpolator.

Channel estimation for the (k+1)-th data subcarrier in the (N-2)-th symbol is performed the same way as that for the k-th data subcarrier in the (N-3)-th symbol of FIG. 6A. However, adjacent pilot subcarriers in the channel estimation for the (k+1)-th data subcarrier in the (N-2)-th symbol are (k+1)-th pilot subcarriers in the (N-3)-th and N-th symbols. In this case, the time domain channel estimation for a (k+1)-th data subcarrier 502 in the (N-1)-th symbol serving as the next estimation target symbol is performed in advance by linearly interpolating channel estimation values of the (k+1)-th pilot subcarriers in the (N-3)-th and N-th symbols, preferably in the same way as the k-th data subcarrier in the (N-2)-th symbol of FIG. 6A.

The time domain channel estimation value of the (k+1)-th data subcarrier in the (N-2)-th symbol is output to the frequency domain interpolator as is. However, after the time domain channel estimation value of the (k+1)-th data subcarrier in the (N-1)-th symbol is stored in the interpolation buffer 202, it is output to the frequency domain interpolator in a position of the (k+1)-th subcarrier when the (N-1)-th symbol is the current estimation target symbol in the next symbol input interval.

The time domain channel estimation for (k+4)-th and (k+7)-th subcarriers, etc. is preferably performed the same way as the (k+1)-th subcarrier in the (N-2)-th symbol.

Time domain channel estimation for all data subcarriers between adjacent pilot subcarriers is performed during the time interval of a current input symbol. As a result, channel estimation values of pilot subcarriers included in four consecutive symbols with a current estimation target symbol are referred to. Because the interpolation buffer 202 stores signal values of the subcarriers in four symbols, available memory is equal to the storage capacity reduced by the memory size required for one symbol as compared to a conventional buffer.

Therefore, the interpolation buffer 202 uses only storage areas 400 to 406 as first to fourth symbol memories m 1 to m4, respectively, as illustrated in FIGS. 6A and 6B. The first symbol memory ml is used for subcarriers from the previous estimation symbol; the second symbol memory m2 is used for subcarriers from the current estimation target symbol; the third symbol memory m3 is used for subcarriers from the next estimation target symbol; and, the fourth symbol memory m4 is used for subcarriers from the current input symbol.

Channel estimation in the (N-3)-th symbol is performed according to the (N-1)-th symbol input as illustrated in FIG. 6A. Subsequently, when channel estimation in the (N-2)-th symbol is performed according to the next N-th symbol input, the storage areas 400 to 406 of the interpolation buffer 202 are changed as illustrated in FIG. 6B. The storage area 400 serving as the first symbol memory m1 for subcarriers in the (N-4)-th symbol serving as the previous estimation symbol at the time of performing the channel estimation in the (N-3)-th symbol is changed to the fourth symbol memory m4 for subcarriers in the N-th symbol serving as a new input symbol. As the (N-3)-th symbol is changed to a previous estimation symbol, the storage area 402 serving as the second symbol memory m2 for subcarriers in the (N-3)-th symbol serving as the current estimation target symbol is changed to the first memory ml. As the (N-2)-th symbol is changed to a current estimation target symbol, the storage area 404 serving as the third symbol memory m3 for subcarriers in the (N-2)-th symbol serving as the next estimation target symbol is changed to the second memory m2. As the (N-1)-th symbol is changed to the next estimation target symbol, the storage area 406 serving as the fourth symbol memory m4 for subcarriers in the (N-1)-th symbol serving as the current input symbol is changed to the third memory m3.

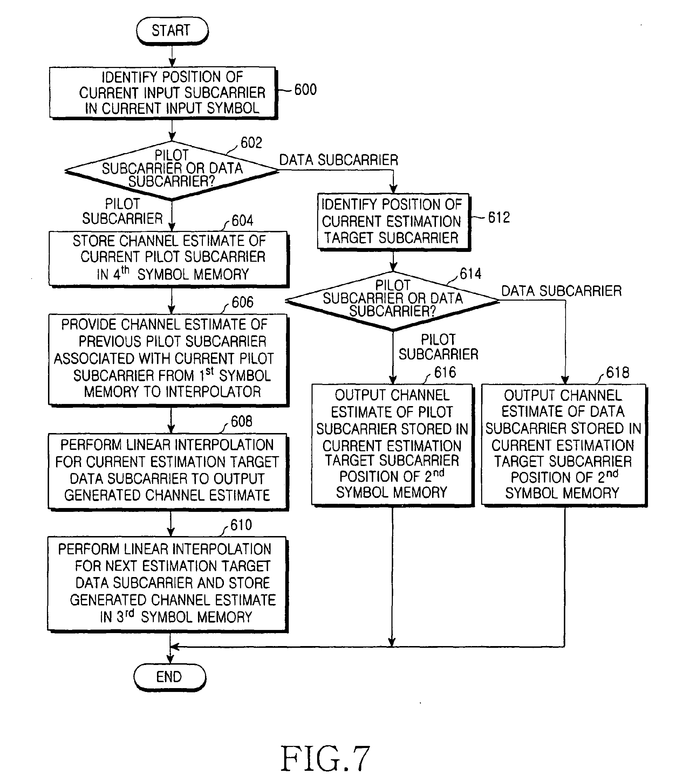

FIG. 7 is a flow chart illustrating a time domain channel estimation procedure in accordance with an embodiment of the present invention. Steps 600 to 618 illustrate a procedure for processing one subcarrier. It is assumed that the channel estimation in the next symbol illustrated in FIG. 6B is performed subsequent to the channel estimation illustrated in FIG. 6A. Time domain channel estimation in accordance with an embodiment of the present invention will be described with reference to FIG. 7. The N-th symbol is a current input symbol, the (N-1)-th symbol is the next estimation target symbol, the (N-2)-th symbol is a current estimation target symbol, and the (N-3)-th symbol is a previous estimation symbol.

First, the case where a current input subcarrier in the current input symbol of Index N is a k-th subcarrier is described. The controller 204 identifies a position of the current input subcarrier in the current input symbol of Index N in step 600. When the current input subcarrier is a pilot subcarrier in step 602, the controller 204 proceeds to step 604. However, when the current input subcarrier is a data subcarrier, the controller 204 proceeds to step 612.

Because the position of the current input subcarrier serves as a k-th subcarrier corresponding to a data subcarrier, the controller 204 proceeds to step 612. In step 612, a position of a current estimation target subcarrier in a current estimation target symbol of Index N-2 is identified. When the current estimation target subcarrier is a pilot subcarrier in step 614, the controller 204 proceeds to step 616. However, when the current estimation target subcarrier is a data subcarrier, the controller 204 proceeds to step 618.

Because the position of the current estimation target subcarrier is the k-th subcarrier corresponding to the data subcarrier 500, a channel estimation value of the data subcarrier 500 stored in the position of the k-th subcarrier serving as the current estimation target subcarrier in the second symbol memory m2 of the interpolation buffer 202 is output to the frequency domain interpolator in step 618. Here, the channel estimation value is the same as a value estimated in advance and stored in the third symbol memory m3 when the (N-3)-th symbol is the current estimation target symbol in FIG. 6A. Because the current estimation target symbol has been changed from the (N-3)-th symbol to the (N-2)-th symbol, the third symbol memory m3 is changed to the second symbol memory m2.

After channel estimation for the k-th subcarrier in the current estimation target symbol of Index N-2 is performed, a (k+1)-th subcarrier serving as the current input subcarrier in the current input symbol of Index N is input. Then, the controller 204 identifies a position of the current input subcarrier in the current input symbol of Index N in step 600. When the current input subcarrier is a pilot subcarrier in step 602, the controller 204 proceeds to step 604. However, when the current input subcarrier is a data subcarrier in step 602, the controller 204 proceeds to step 612.

Because the position of the current input subcarrier is the (k+1)-th subcarrier corresponding to a pilot subcarrier, the controller 204 proceeds to step 604. In step 604, a channel estimation value of the current input pilot subcarrier serving as the (k+1)-th subcarrier in the N-th symbol is received from the pilot channel estimator, and is stored in the position of the (k+1)-th subcarrier serving as the current input subcarrier in the fourth symbol memory m4. At the same time, the channel estimation value of the (k+1)-th pilot subcarrier in the N-th symbol is input and temporarily stored in the second register 302. The controller 204 directs the data selector 316 to select the channel estimation value of the current input subcarrier that is commonly input into the second register 302, and the data selector 316, rather than the multiplier 314 output.

Subsequently, a channel estimation value of the (k+1)-th pilot subcarrier in the (N-3)-th symbol serving as the previous pilot subcarrier associated with the current pilot subcarrier is output from the first symbol memory m1 and temporarily stored in the first register 300 in step 606.

As mentioned above, the channel estimation value of the previous pilot subcarrier is temporarily stored in the first register 300. When the channel estimation value of the current pilot subcarrier is temporarily stored in the second register 302, linear interpolation for the (k+1)-th data subcarrier in the (N-2)-th symbol (serving as a current estimation target data subcarrier) is performed according to Equation (1) in step 608. The channel estimate generated by the linear interpolation is then output to the frequency domain interpolator. The controller 204 controls the data selectors 308, 310, and 316 when linear interpolation is performed according to Equation (1).

In step 610, linear interpolation for a (k+1)-th data subcarrier 502 in the (N-1)-th symbol, serving as the next estimation target data subcarrier, is performed according to Equation (2). The generated channel estimation value is stored in the position of the (k+1)-th subcarrier, serving as the current input subcarrier, in the third symbol memory m3. The controller 204 controls the data selectors 308, 310, and 316 when the linear interpolation is performed according to Equation (2).

After channel estimation for the (k+1)-th subcarrier in the current estimation target symbol of Index N-2 is performed, a (k+2)-th subcarrier, serving as a current input subcarrier in the current input symbol of Index N, is input. Then, the controller 204 identifies a position of the current input subcarrier in the current input symbol of Index N in step 600. When the current input subcarrier is a pilot subcarrier in step 602, the controller 204 proceeds to step 604. However, when the current input subcarrier is a data subcarrier in step 602, the controller 204 proceeds to step 612.

Because the position of the current input subcarrier is the (k+2)-th subcarrier corresponding to a data subcarrier, the controller 204 proceeds to step 612 where the position of the current estimation target subcarrier is identified in the current estimation target symbol of Index N-2. When the current estimation target subcarrier is a pilot subcarrier in step 612, the controller 204 proceeds to step 616. However, when the current estimation target subcarrier is a data subcarrier in step 612, the controller 204 proceeds to step 618.

Because the position of the current estimation target subcarrier is the (k+2)-th subcarrier corresponding to a pilot subcarrier, a channel estimation value of the pilot subcarrier stored in the position of the (k+2)-th subcarrier serving as the current estimation target subcarrier in the second symbol memory m2 of the interpolation buffer 202 is output to the frequency domain interpolator in step 616. Here, the channel estimation value is the same as a value stored in the third symbol memory m3 when the (N-1)-th symbol is the current input symbol. Because the current input symbol has been changed from the (N-1)-th symbol to the N-th symbol, the third symbol memory m3 is changed to the second symbol memory m2.

Subsequently, the time domain channel estimation for the remaining (k+3)-th, (k+4)-th, and (k+5)-th subcarriers, etc. in the (N-2)-the symbol is performed preferably in the same way as that for the k-th, (k+1)-th, and (k+2) subcarriers in the (N-2)-th symbol.

The time domain channel estimation for subcarriers in order of $k{\rightarrow}k{+}1{\rightarrow}k{+}2{\rightarrow}k{+}3{\rightarrow}k{+}4{\rightarrow}k{+}5{\rightarrow}\cdots$ in the (N-2)-th symbol is performed normally such that the frequency domain interpolator performs the frequency domain channel estimation associated with the (N-2)-th symbol. The size of the interpolation buffer 202 may be reduced by the memory required for one symbol.

When the N-th symbol is input as illustrated in FIG. 6B, the first symbol memory ml is used to provide the interpolator 200 with the channel estimation value of a previous pilot subcarrier. After the channel estimation value of the previous pilot subcarrier from the first symbol memory m 1 is stored temporarily in the first register 300 and used for time domain channel estimation for the (N-2)-th and (N-1)-th symbols, channel estimation is not affected, even though the channel estimation value of a current input pilot subcarrier is overwritten on the first symbol memory ml.

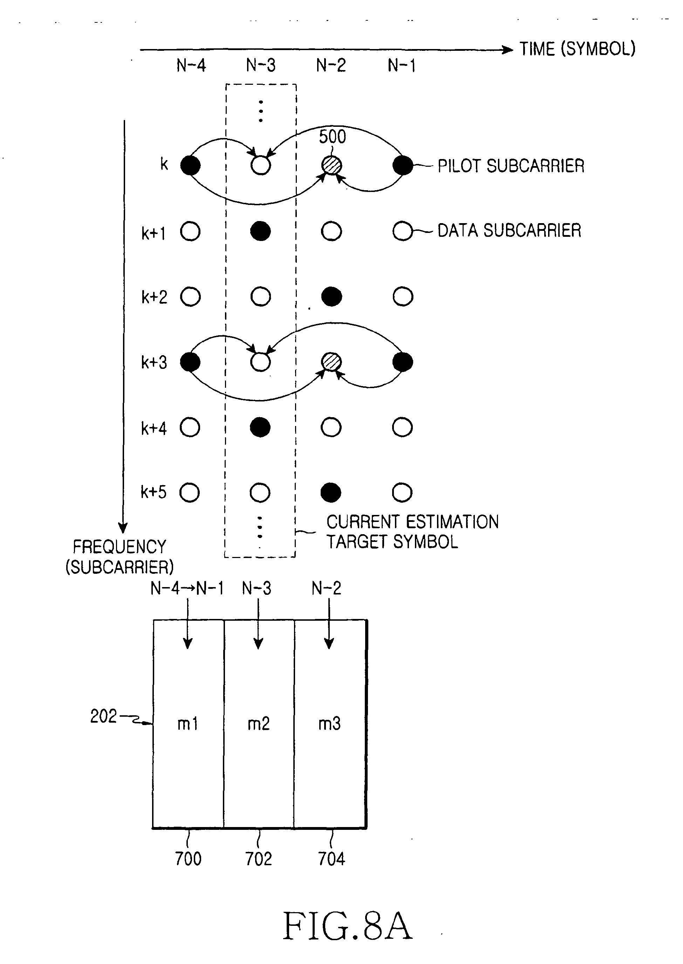

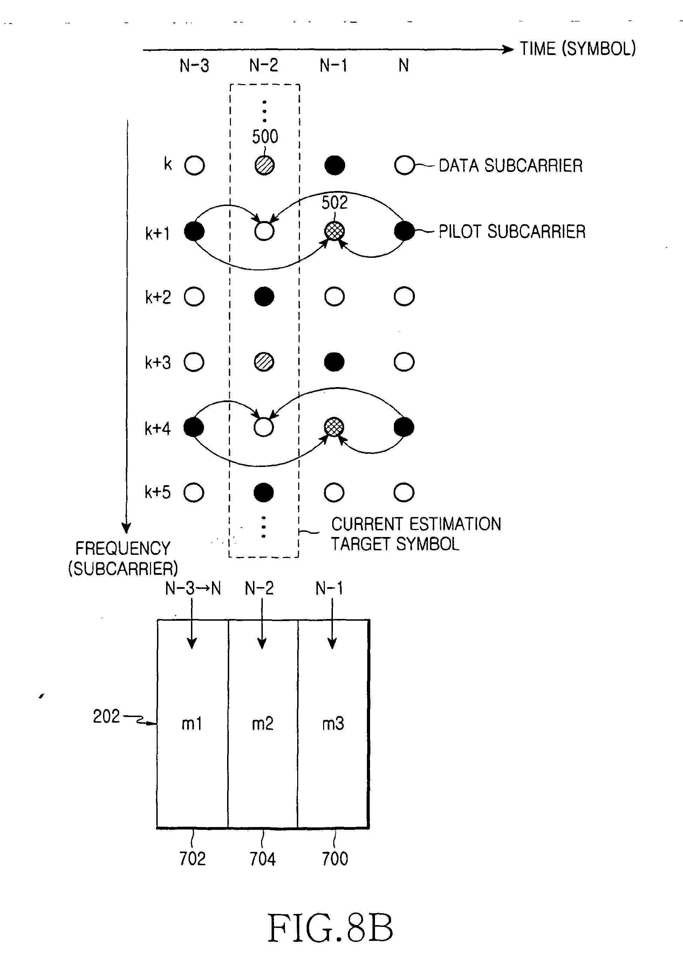

An example of using a shared storage area for both previous and current input symbols is illustrated in FIGS. 8A and 8B which correspond to FIGS. 6A and 6B, respectively.

When FIG. 8A is compared with FIG. 6A, channel estimation is the same. Second and third symbol memories m2 and m3 of storage areas 702 and 704 in FIG. 8A are the same as those in FIG. 6A. However, it can be seen from FIG. 8A that a first symbol memory ml of a storage area 700 is different from a storage area for the (N-4)-th symbol serving as the previous estimation symbol to a storage area for the (N-1)-th symbol serving as the current input symbol.

When FIG. 8B is compared with FIG. 6B, the channel estimation is the same. Second and third symbol memories m2 and m3 of storage areas 704 and 700 in FIG. 8B are the same as those in FIG. 6B. However, it can be seen from FIG. 8B that a first symbol memory m1 of a storage area 702 is different from a storage area for the (N-3)-th symbol serving as the previous estimation symbol to a storage area for the N-th symbol serving as the current input symbol. A function of the storage area is normally changed according to input subcarriers in the order $k \rightarrow k{+}1 \rightarrow k{+}2 \rightarrow k{+}3 \rightarrow k{+}4 \rightarrow k{+}5 \rightarrow...$

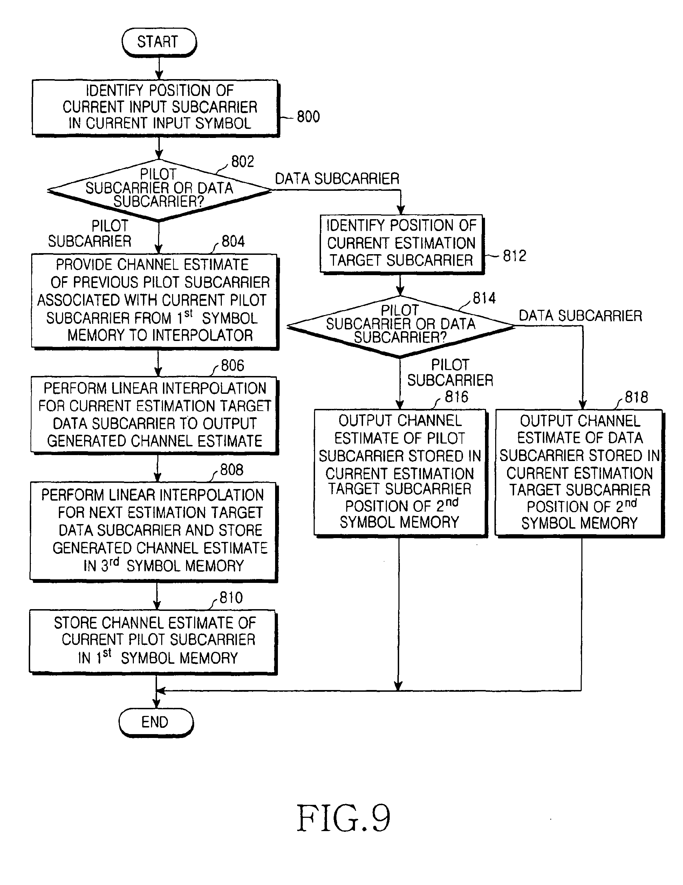

When a single storage area is used for both previous and current input symbols, the memory size of the interpolation buffer 202 used for the channel estimation associated with FIGS. 8A, 8B, and 9 may be reduced by the memory required for one symbol

FIG. 9 is a flow chart illustrating a time domain channel estimation procedure in accordance with an alternative embodiment of the present invention when a single storage area is used for both previous and current input symbols. When steps 800 to 818 of FIG. 9 are compared with steps 600 to 618 of FIG. 7, steps 800 and 802 correspond to steps 600 and 602, steps 812 to 818 correspond to steps 612 to 618, and steps 804 to 808 correspond to steps 606 to 610. FIG. 9 is different from FIG. 7 in that step 810 (corresponding to step 604) is performed after steps 804 to 808.

In FIG. 7, linear interpolation for data subcarriers in the current and next estimation target symbols is performed after the channel estimation value of the current pilot subcarrier is stored. In the example of FIG. 9, the channel estimation value of the current pilot subcarrier is stored after linear interpolation for data subcarriers in the current and next estimation target symbols is performed.

Steps 804 to 810 will be described with reference to FIG. 8B. When the current input subcarrier is the (k+1)-th pilot subcarrier, the channel estimation value of the (k+1)-th pilot subcarrier in the N-th symbol is temporarily stored in the second register 302.

In this state, the controller 204 reads the channel estimation value of the previous pilot subcarrier associated with the current pilot subcarrier (the (k+1)-th pilot subcarrier in the (N-3)-th symbol) from the first symbol memory m1 and stores it in the first register 300 temporarily.

When the channel estimation value of the current pilot subcarrier is temporarily stored in the second register 302, linear interpolation for the (k+1)-th data subcarrier in the (N-2)-th symbol, serving as a current estimation target data subcarrier, is performed according to Equation (1) in step 806. The generated channel estimation value is output to the frequency domain interpolator.

In step 808, linear interpolation for the (k+1)-th data subcarrier 502 in the (N-1)-th symbol serving as the next estimation target data subcarrier is performed according to Equation (2). The generated channel estimation value is stored in the position of the (k+1)-th subcarrier serving as the current input subcarrier in the third symbol memory m3.

In step 810, a channel estimation value of the current input pilot subcarrier serving as the (k+1)-th subcarrier in the N-th symbol is received from the pilot channel estimator, and is stored in the position of the (k+1)-th subcarrier serving as the current input subcarrier in the first symbol memory ml.

When a single storage area is used for both previous and current input symbols, the memory size of the interpolation buffer 202 may be reduced by the memory required for two symbols, as compared with the conventional memory size, without degrading channel estimation performance.

Time domain channel estimation for all data subcarriers between adjacent pilot subcarriers is performed during the time interval of a current input symbol. Channel estimation for the next estimation target symbol is performed, and the channel estimation value is stored. Then, when the next estimation target symbol becomes the current estimation target symbol, the stored channel estimation value is output, such that the memory required for the channel estimation is reduced without degrading channel estimation performance.

Although preferred embodiments of the present invention have been disclosed for illustrative purposes, those skilled in the art will appreciate that various modifications, additions and substitutions are possible, without departing from the scope of the present invention.

An example with two data subcarriers between adjacent pilot subcarriers on the time axis has been disclosed herein. Of course, the case there are more than two data subcarriers between adjacent pilot subcarriers can be applied to the present invention. In this case, the number of symbol memories is increased by the added number of next estimation target symbols for which linear interpolation is performed during the time interval of one symbol.

The present invention can be applied not only to a communication system using an orthogonal frequency division multiplexing (OFDM) scheme (OFDM system), but also to a communication system using an orthogonal frequency division multiple access (OFDMA) scheme (OFDMA system), or any system in which channel estimation is performed using the adjacent pilot subcarriers.

Therefore, the present invention is not limited to the above-described embodiments, but is defined by the following claims.

**Claims**

1. A method for performing channel estimation for a plurality of data subcarriers in a system in which pilots are assigned every predetermined number of symbols with respect to defined subcarriers, a position of a pilot subcarrier within the subcarriers is shifted in a unit of a predetermined number of symbols, and the data subcarriers are positioned between adjacent pilot subcarriers on a time axis, the method comprising:

   receiving channel estimation values of current pilot subcarriers in a current input symbol; and
   identifying (600) a position of current input subcarrier in the current input symbol;
   when (602) the current input subcarrier is a pilot subcarrier, storing (604) channel estimation value of the current pilot subcarrier;
   linearly interpolating (608) the channel estimation value of the current pilot subcarrier and a channel estimation value of a previous pilot subcarrier previously stored adjacent to the current pilot subcarrier on the time axis, and generating channel estimation values of data subcarriers, including data carrier in a current estimation target symbol and data carrier in a next estimation target symbol, positioned between the current and previous pilot subcarriers,
   wherein the current estimation target symbol precedes the next estimation target symbol, and the next estimation target symbol precedes the current input symbol on the time axis;
   outputting (608) the channel estimation value of the data subcarrier in the current estimation target symbol;
   storing (610) the channel estimation value of the data subcarrier in the next estimation target symbol;
   when (602) the current input subcarrier is not a pilot subcarrier, identifying (612) a corresponding subcarrier in the current estimation target symbol,
   when (614) the corresponding subcarrier in the current estimation target symbol is a pilot subcarrier, outputting (616) a channel estimation value of the pilot subcarrier previously stored in the current estimation target symbol; and
   when (614) the corresponding subcarrier in the current estimation target symbol is a data subcarrier, outputting (618) a channel estimation value of the data subcarrier estimated during a time interval of a previous input symbol and stored in a corresponding position.

2. A method for performing channel estimation for a plurality of data subcarriers in a system in which pilots are assigned every predetermined number of symbols with respect to defined subcarriers, a position of a pilot subcarrier within the subcarriers is shifted in a unit of a predetermined number of symbols, and the data subcarriers are positioned between adjacent pilot subcarriers on a time axis, the method comprising:

> receiving channel estimation values of current pilot subcarriers in a current input symbol; and
> identifying (800) a position of current input subcarrier in the current input symbol;
> when (802) the current input subcarrier is a pilot subcarrier, linearly interpolating (806) the channel estimation value (804) of the current pilot subcarrier and a channel estimation value of a previous pilot subcarrier previously stored adjacent to the current pilot subcarrier on the time axis, and generating channel estimation values of data subcarriers, including data carrier in a current estimation target symbol and data carrier in a next estimation target symbol, positioned between the current and previous pilot subcarriers, wherein the current estimation target symbol precedes the next estimation target symbol, and the next estimation target symbol precedes the current input symbol on the time axis;
> outputting (806) the channel estimation value of the data subcarrier in the current estimation target symbol;
> storing (810) the channel estimation value of the data subcarrier in the next estimation target symbol;
> when (802) the current input subcarrier is not a pilot subcarrier, identifying (812) a corresponding subcarrier in the current estimation target symbol;
> when (814) the corresponding subcarrier in the current estimation target symbol is a pilot subcarrier, outputting (816) a channel estimation value of the pilot subcarrier previously stored in the current estimation target symbol;
> when (814) the corresponding subcarrier in the current estimation target symbol is a data subcarrier, outputting (818) a channel estimation value of the data subcarrier estimated during a time interval of a previous input symbol and stored in a corresponding position; and
> overwriting the channel estimation value of the previous pilot subcarrier with the channel estimation value of the current pilot subcarrier.

3. The method according to claim 1, wherein the number of data subcarriers positioned between the current and previous pilot subcarriers is two.

4. The method according to claim 2, wherein the number of data subcarriers positioned between the current and previous pilot subcarriers is two.

5. An apparatus for performing channel estimation for a plurality of data subcarriers in a system in which pilots are assigned every predetermined number of symbols with respect to defined subcarriers, a position of a pilot subcarrier within the subcarriers is shifted in a unit of a predetermined number of symbols, and the data subcarriers are positioned between adjacent pilot subcarriers on a time axis, the apparatus comprising:

> an interpolator (200) for linearly interpolating a channel estimation value of a current pilot subcarrier among pilot subcarriers in a current input symbol and a channel estimation value of a previous pilot subcarrier associated therewith on the time axis, and generating channel estimation values of data subcarriers, including data carrier in a current estimation target symbol and data carrier in a next estimation target symbol, positioned between the current and previous pilot subcarriers, wherein the current estimation target symbol precedes the next estimation target symbol, and the next estimation target symbol precedes the current input symbol on the time axis;
> an interpolation buffer (202) for storing channel estimation values of pilot subcarriers in the current input symbol channel estimation values of previous pilot subcarriers in a previous symbol associated therewith on the time axis, channel estimation values of pilot subcarriers in the current estimation target symbol, and channel estimation values of data subcarriers in the next estimation target symbol; and
> a controller (204) for controlling linear interpolation in the interpolator such that channel estimation on the time axis for data subcarriers between the current and previous pilot subcarriers associated with each of the pilot subcarriers in the current input symbol is performed during a time interval of the current input symbol;
> the controller is further adapted for controlling the interpolator (200) to output the channel estimation value of the data subcarrier in the current estimation target symbol, and for controlling the interpolation buffer to store the channel estimation value of the data subcarrier in the next estimation target symbol; in a next time interval, when the next estimation target symbol becomes the current estimation target symbol, the controller is adapted for controlling the interpolation buffer to output the channel estimation value of the data subcarrier stored.

**6.** The apparatus according to claim 5, wherein the interpolation buffer (202) separately includes a storage area for storing the channel estimation values of the pilot subcarriers in the current input symbol, and a storage area for storing the channel estimation values of the previous pilot subcarriers in the previous symbol associated therewith on the time axis.

**7.** The apparatus according to claim 6, wherein the number of data subcarriers positioned between the adjacent pilot subcarriers is two, and wherein the interpolation buffer includes four symbol areas.

**8.** The apparatus according to claim 5, wherein the interpolation buffer (202) uses a common storage area for storing the channel estimates of the pilot subcarriers in both the current input symbol and the previous symbol associated therewith on the time axis.

**9.** The apparatus according to claim 8, wherein the number of data subcarriers positioned between the adjacent pilot subcarriers is two, and wherein the interpolation buffer includes three symbol areas.


**Patentansprüche**

**1.** Verfahren zum Durchführen von Kanal-Schätzung für eine Vielzahl von Daten-Teilträgern in einem System, in dem Piloten jeder vorgegebenen Anzahl von Symbolen in Bezug auf definierte Teilträger zugewiesen werden, wobei eine Position eines Pilot-Teilträgers innerhalb der Teilträger in einer Einheit einer vorgegebenen Anzahl von Symbolen verschoben wird und die Daten-Teilträger zwischen benachbarten Pilot-Teilträgern auf einer Zeitachse positioniert werden, wobei das Verfahren umfasst:

Empfangen von Kanal-Schätzwerten aktueller Pilot-Teilträger in einem aktuellen Eingangssymbol; und
Identifizieren (600) einer Position eines aktuellen Teilträgers in dem aktuellen Eingangssymbol;
wenn (602) der aktuelle Eingangs-Teilträger ein Pilot-Teilträger ist, Speichern (604) des Kanal-Schätzwertes des aktuellen Pilot-Teilträgers;
lineares Interpolieren (608) des Kanal-Schätzwertes des aktuellen Pilot-Teilträgers und eines Kanal-Schätzwertes eines zuvor an den aktuellen Pilot-Teilträger auf der Zeitachse angrenzend gespeicherten vorangehenden Pilot-Teilträgers und Erzeugen von Kanal-Schätzwerten von Daten-Teilträgern einschließlich eines Datenträgers in einem aktuellen Schätz-Zielsymbol und eines Datenträgers in einem nächsten Schätz-Zielsymbol, die zwischen dem aktuellen und vorangehenden Pilot-Teilträgern positioniert sind, wobei auf der Zeitachse das aktuelle Schätz-Zielsymbol dem nächsten Schätz-Zielsymbol vorangeht und das nächste Schätz-Zielsymbol dem aktuellen Eingangssymbol vorangeht,
Ausgeben (608) des Kanal-Schätzwertes des Daten-Teilträgers in dem aktuellen Schätz-Zielsymbol;
Speichern (610) des Kanal-Schätzwertes des Daten-Teilträgers in dem nächsten Schätz-Zielsymbol;
wenn (602) der aktuelle Eingangs-Teilträger kein- Pilot-Teilträger ist, Identifizieren (612) eines entsprechenden Teilträgers in dem aktuellen Schätz-Zielsymbol;
wenn (614) der entsprechende Teilträger in dem aktuellen Schätz-Zielsymbol ein Pilot-Teilträger ist, Ausgeben (616) eines Kanal-Schätzwertes des zuvor in dem aktuellen Schätz-Zielsymbol gespeicherten Pilot-Teilträgers; und
wenn (614) der entsprechende Teilträger in dem aktuellen Schätz-Zielsymbol ein Daten-Teilträger ist, Ausgeben (618) eines Kanal-Schätzwertes des während eines Zeitintervalls eines vorangehenden Eingangssymbols geschätzten und an einer entsprechenden Position gespeicherten Daten-Teilträgers.

**2.** Verfahren zum Durchführen von Kanalschätzung für eine Vielzahl von Daten-Teilträgern in einem System, in dem Piloten jeder vorgegebenen Anzahl von Symbolen in Bezug auf definierte Teilträger zugewiesen werden, wobei eine Position eines Pilot-Teilträgers innerhalb der Teilträger in einer Einheit einer vorgegebenen Anzahl von Symbolen verschoben wird und die Daten-Teilträger zwischen benachbarten Pilot-Teilträgern auf einer Zeitachse positioniert werden, wobei das Verfahren umfasst:

Empfangen von Kanal-Schätzwerten aktueller Pilot-Teilträger in einem aktuellen Eingangssymbol; und
Identifizieren (800) einer Position eines aktuellen Eingangs-Teilträgers in dem aktuellen Eingangssymbol;
wenn (802) der aktuelle Eingangs-Teilträger ein Pilot-Teilträger ist, lineares Interpolieren (806) des Kanal-Schätzwertes (804) des aktuellen Pilot-Teilträgers sowie eines Kanal-Schätzwertes eines zuvor an den Pilot-Teilträger auf der Zeitachse angrenzend gespeicherten vorangehenden Pilot-Teilträgers, und Erzeugen von Kanal-Schätzwerten von Daten-Teilträgern einschließlich eines Datenträgers in einem aktuellen Schätz-Zielsymbol sowie eines Datenträgers in einem nächsten Schätz-Zielsymbol, die zwischen dem aktuellen und dem vorangegangenen Pilot-Teilträger positioniert sind, wobei auf der Zeitachse das aktuelle Schätz-Zielsymbol dem nächsten Schätz-Zielsymbol vorangeht und das nächste Schätz-Zielsymbol dem aktuellen Eingangssymbol vorangeht;

Ausgeben (806) des Kanal-Schätzwertes des Daten-Teilträgers in dem aktuellen Schätz-Zielsymbol;

Speichern (810) des Kanal-Schätzwertes des Daten-Teilträgers in dem nächsten Schätz-Zielsymbol;

wenn (802) der aktuelle Eingangs-Teilträger kein Pilot-Teilträger ist, Identifizieren (812) eines entsprechenden Teilträgers in dem aktuellen Schätz-Zielsymbol;

wenn (814) der entsprechende Teilträger in dem aktuellen Schätz-Zielsymbol ein Pilot-Teilträger ist, Ausgeben (816) eines Kanal-Schätzwertes des zuvor in dem aktuellen Schätz-Zielsymbol gespeicherten Pilot-Teilträgers;

wenn (814) der entsprechende Teilträger in dem aktuellen Schätz-Zielsymbol ein Daten-Teilträger ist, Ausgeben (818) eines Kanal-Schätzwertes des während eines vorangegangenen Eingangssymbols geschätzten und an einer entsprechenden Position gespeicherten Daten-Teilträgers; und

Überschreiben des Kanal-Schätzwertes des vorangehenden. Pilot-Teilträgers mit dem Kanal-Schätzwert des aktuellen Pilot-Teilträgers.

3. Verfahren nach Anspruch 1, wobei die Anzahl von Daten-Teilträgern, die zwischen dem aktuellen und dem vorangehenden Pilot-Teilträger positioniert sind, zwei beträgt.

4. Verfahren nach Anspruch 2, wobei die Anzahl von Daten-Teilträgern, die zwischen dem aktuellen und dem vorangehenden Pilot-Teilträger positioniert sind, zwei beträgt.

5. Vorrichtung zum Durchführen von Kanal-Schätzung für eine Vielzahl von Daten-Teilträgern in einem System, in dem Piloten jeder vorgegebenen Anzahl von Symbolen in Bezug auf definierte Teilträger zugewiesen werden, wobei eine Position eines Pilot-Teilträgers innerhalb der Teilträger in einer Einheit einer vorgegebenen Anzahl von Symbolen verschoben wird, und die Daten-Teilträger zwischen benachbarten Pilot-Teilträgern auf einer Zeitachse positioniert werden, wobei die Vorrichtung umfasst:

eine Interpolationseinrichtung (200), die einen Kanal-Schätzwert eines aktuellen Pilot-Teilträgers unter Pilot-Teilträgern in einem aktuellen Eingangssymbol sowie einen Kanal-Schätzwert eines auf der Zeitachse damit verknüpften vorangehenden Pilot-Teilträges interpoliert, und Kanal-Schätzwerte von Daten-Teilträgern einschließlich eines Datenträgers in einem aktuellen Schätz-Zielsymbol sowie eines Datenträgers in einem nächsten Schätz-Zielsymbol, die zwischen dem aktuellen und dem vorangegangenen Pilot-Teilträger positioniert sind, interpoliert, wobei auf der Zeitachse das aktuelle Schätz-Zielsymbol dem nächsten Schätz-Zielsymbol vorangeht und das nächste Schätz-Zielsymbol dem aktuellen Eingangssymbol vorangeht;

einen Interpolations-Puffer (202), der Kanal-Schätzwerte von Pilot-Teilträgern in dem aktuellen Eingangssymbol, Kanal-Schätzwerte vorangehender Pilot-Teilträger in einem vorangehenden Symbol, das damit auf der Zeitachse verknüpft ist, Kanal-Schätzwerte von Pilot-Teilträgern in dem aktuellen Schätz-Zielsymbol und Kanal-Schätzwerte von Daten-Teilträgern in dem nächsten Schätz-Zielsymbol speichert; und

eine Steuereinheit (204), die lineare Interpolation in der Interpolationseinrichtung so steuert, dass die Kanal-Schätzung auf der Zeitachse für Daten-Teilträger zwischen dem aktuellen und dem vorangehenden Pilot-Teilträger, die mit jedem der Pilot-Teilträger in dem aktuellen Eingangssymbol verknüpft sind, während eines Zeitintervalls des aktuellen Eingabesymbols durchgeführt wird;

die Steuereinheit des weiteren so eingerichtet ist, dass sie die Interpolationseinrichtung (200) so steuert, dass sie den Kanal-Schätzwert des Daten-Teilträgers in dem aktuellen Schätz-Zielsymbol ausgibt, und dass sie den Interpolations-Puffer so steuert, dass er den Kanal-Schätzwert des Daten-Teilträgers in dem nächsten Schätz-Zielsymbol in einem nächsten Zeitintervall speichert, wenn das nächste Schätz-Zielsymbol das aktuelle Schätz-Zielsymbol wird, und die Steuereinheit so eingerichtet ist, dass sie den Interpolations-Puffer so steuert, dass er den Kanal-Schätzwert des gespeicherten Daten-Teilträgers ausgibt.

6. Vorrichtung nach Anspruch 5, wobei der Interpolations-Puffer (202) separat einen Speicherbereich zum Speichern der Kanal-Schätzwerte der Pilot-Teilträger in dem aktuellen Eingangssymbol und einen Speicherbereich zum Speichern der Kanal-Schätzwerte der vorangehenden Pilot-Teilträger in dem vorangehenden Symbol enthält, die damit auf der Zeitachse verknüpft sind.

7. Vorrichtung nach Anspruch 6, wobei die Anzahl von Daten-Teilträgern, die zwischen den benachbarten Pilot-Teilträgern positioniert sind, zwei beträgt und der Interpolations-Puffer vier Symbol bereiche enthält.

**8.** Vorrichtung nach Anspruch 5, wobei der Interpolations-Puffer (202) einen gemeinsamen Speicherbereich zum Speichern der Kanal-Schätzwerte der Pilot-Teilträger sowohl in dem aktuellen Eingangssymbol als auch dem damit verknüpften vorangehenden Symbol auf der Zeitachse verwendet.

**9.** Vorrichtung nach Anspruch 8, wobei die Anzahl von Daten-Teilträgern, die zwischen den benachbarten Pilot-Teilträgern positioniert sind, zwei beträgt und der Interpolations-Puffer drei Symbolbereiche enthält.


**Revendications**

**1.** Procédé pour effectuer une estimation de canal sur une pluralité de sous-porteuses de données dans un système dans lequel des pilotes sont attribués à un sur un nombre prédéterminé de symboles par rapport à des sous-porteuses définies, la position d'une sous-porteuse pilote parmi les sous-porteuses est décalée d'un bloc d'un nombre prédéterminé de symboles, et les sous-porteuses de données sont positionnées entre des sous-porteuses pilotes adjacentes sur un axe des temps, le procédé consistant à :

recevoir des valeurs d'estimation de canal de sous-porteuses pilotes courantes dans un symbole d'entrée courant ; et
identifier (600) une position d'une sous-porteuse d'entrée courante dans le symbole d'entrée courant ;
lorsque (602) la sous-porteuse d'entrée courante est une sous-porteuse pilote, stocker (604) la valeur d'estimation de canal de la sous-porteuse pilote courante ;
interpoler linéairement (608) la valeur d'estimation de canal de la sous-porteuse pilote courante et une valeur d'estimation de canal d'une sous-porteuse pilote précédente précédemment stockée de façon adjacente à la sous-porteuse pilote courante sur l'axe des temps, et générer des valeurs d'estimation de canal de sous-porteuses de données, comprenant une porteuse de données dans un symbole cible d'estimation courant et une porteuse de données dans un symbole cible d'estimation suivant, positionnée entre les sous-porteuses pilotes courante et précédente, dans lequel le symbole cible d'estimation courant précède le symbole cible d'estimation suivant, et le symbole cible d'estimation suivant précède le symbole d'entrée courant sur l'axe des temps ;
fournir en sortie (608) la valeur d'estimation de canal de la sous-porteuse de données dans le symbole cible d'estimation courant ;
stocker (610) la valeur d'estimation de canal de la sous-porteuse de données dans le symbole cible d'estimation courant ;
lorsque (602) la sous-porteuse d'entrée courante n'est pas une sous-porteuse pilote, identifier (612) une sous-porteuse correspondante dans le symbole cible d'estimation courant ;
lorsque (614) la sous-porteuse correspondante dans le symbole cible d'estimation courant est une sous-porteuse pilote, fournir en sortie (616) une valeur d'estimation de canal de la sous-porteuse pilote précédemment stockée dans le symbole cible d'estimation courant ; et
lorsque (614) la sous-porteuse correspondante dans le symbole cible d'estimation courant est une sous-porteuse de données, fournir en sortie (618) une valeur d'estimation de canal de la sous-porteuse de données estimée pendant un intervalle de temps d'un symbole d'entrée précédent et stockée à une position correspondante.

**2.** Procédé pour effectuer une estimation de canal sur une pluralité de sous-porteuses de données dans un système dans lequel des pilotes sont attribués à un sur un nombre prédéterminé de symboles par rapport à des sous-porteuses définies, la position d'une sous-porteuse pilote parmi les sous-porteuses est décalée d'un bloc d'un nombre prédéterminé de symboles, et les sous-porteuses de données sont positionnées entre des sous-porteuses pilotes adjacentes sur un axe des temps, le procédé consistant à:

recevoir des valeurs d'estimation de canal de sous-porteuses pilotes courantes dans un symbole d'entrée courant ; et
identifier (800) une position d'une sous-porteuse d'entrée courante dans le symbole d'entrée courant ;
lorsque (802) la sous-porteuse d'entrée courante est une sous-porteuse pilote, interpoler linéairement (806) la valeur d'estimation de canal (804) de la sous-porteuse pilote courante et une valeur d'estimation de canal d'une sous-porteuse pilote précédente précédemment stockée de façon adjacente à la sous-porteuse pilote courante sur l'axe des temps, et générer des valeurs d'estimation de canal de sous-porteuses de données, comprenant une porteuse de données dans un symbole cible d'estimation courant et une porteuse de données dans un symbole cible d'estimation suivant, positionnées entre les sous-porteuses courante et précédente, dans lequel le symbole cible d'estimation courant précède le symbole cible d'estimation suivant, et le symbole cible d'estimation suivant précède le symbole d'entrée courant sur l'axe des temps ;

fournir en sortie (806) la valeur d'estimation de canal de la sous-porteuse de données dans le symbole cible d'estimation courant ;

stocker (810) la valeur d'estimation de canal de la sous-porteuse de données dans le symbole cible d'estimation suivant ;

lorsque (802) la sous-porteuse d'entrée courante n'est pas une sous-porteuse pilote, identifier (812) une sous-porteuse correspondante dans le symbole cible d'estimation courant;

lorsque (814) la sous-porteuse correspondante dans le symbole cible d'estimation courant est une sous-porteuse pilote, fournir en sortie (816) une valeur d'estimation de canal d'une sous-porteuse pilote précédemment stockée dans le symbole cible d'estimation courant ;

lorsque (814) la sous-porteuse correspondante dans le symbole cible d'estimation courant est une sous-porteuse de données, fournir en sortie (818) une valeur d'estimation de canal de la sous-porteuse de données estimée pendant un intervalle de temps d'un symbole d'entrée précédent et stockée à une position correspondante ; et

remplacer la valeur d'estimation de canal de la sous-porteusé pilote précédente par la valeur d'estimation de canal de la sous-porteuse pilote courante.

**3.** Procédé selon la revendication 1, dans lequel le nombre de sous-porteuses positionnées entre les sous-porteuses pilotes courante et précédente est de deux.

**4.** Procédé selon la revendication 2, dans lequel le nombre de sous-porteuses de données positionnées entre les sous-porteuses pilotes courante et précédente est de deux.

**5.** Appareil pour effectuer une estimation de canal sur une pluralité de sous-porteuses de données dans un système dans lequel des pilotes sont attribués à un sur un nombre prédéterminé de symboles par rapport à des sous-porteuses définies, la position d'une sous-porteuse pilote parmi les sous-porteuses est décalée d'un bloc d'un nombre prédéterminé de symboles, et les sous-porteuses de données sont positionnées entre des sous-porteuses pilotes adjacentes sur un axe des temps, l'appareil comprenant :

un interpolateur (200) pour interpoler linéairement une valeur d'estimation de canal d'une sous-porteuse pilote courante parmi des sous-porteuses pilotes dans un symbole d'entrée courant et une valeur d'estimation de canal d'une sous-porteuse pilote précédente associée à celui-ci sur l'axe des temps, et générer des valeurs d'estimation de canal de sous-porteuses de données, comprenant une porteuse de données dans un symbole cible d'estimation courant et une porteuse de données dans un symbole cible d'estimation suivant, positionnée entre les sous-porteuses pilotes courante et précédente, dans lequel le symbole cible d'estimation courant précède le symbole cible d'estimation suivant et le symbole cible d'estimation suivant précède le symbole d'entrée courant sur l'axe des temps ;

un tampon d'interpolation (202) pour stocker des valeurs d'estimation de canal de sous-porteuses pilotes dans les valeurs d'estimation de canal de symboles d'entrée courants de sous-porteuses pilotes précédentes dans un symbole précédent associé à celles-ci sur l'axe des temps, des valeurs d'estimation de canal de sous-porteuses pilotes dans le symbole cible d'estimation courant, et des valeurs d'estimation de canal de sous-porteuses de données dans le symbole cible d'estimation suivant ; et

une unité de commande (204) pour commander l'interpolation linéaire effectuée dans l'interpolateur de façon que l'estimation de canal sur l'axe des temps pour des sous-porteuses de données comprises entre les sous-porteuse pilotes courante et précédente associées à chacune des sous-porteuses pilotes dans le symbole d'entrée courant, soit effectuée pendant l'intervalle de temps du symbole d'entrée courant ;

l'unité de commande étant en outre conçue pour commander l'interpolateur (200) afin qu'il fournisse en sortie la valeur d'estimation de canal de la sous-porteuse de données dans le symbole cible d'estimation courant, et pour commander le tampon d'interpolation afin qu'il stocke la valeur d'estimation de canal de la sous-porteuse de données dans le symbole cible d'estimation suivant, dans un intervalle de temps suivant, lorsque le symbole cible d'estimation suivant devient le symbole cible d'estimation courant, l'unité dé commande étant conçue pour commander le tampon d'interpolation afin qu'il fournisse en sortie la valeur d'estimation de canal de la sous-porteuse de données stockée.

**6.** Appareil selon la revendication 5, dans lequel le tampon d'interpolation (202) comprend séparément une zone de stockage pour stocker les valeurs d'estimation de canal des sous-porteuses pilotes dans le symbole d'entrée courant, et une zone de stockage pour stocker les valeurs d'estimation de canal des sous-porteuses pilotes précédentes dans le symbole précédent associé à celles-ci sur l'axe des temps.

7.  Appareil selon la revendication 6, dans lequel le nombre de sous-porteuses de données positionnées entre les sous-porteuses pilotes adjacentes est de deux et dans lequel le tampon d'interpolation comprend quatre zones de symboles.

8.  Appareil selon la revendication 5, dans lequel le tampon d'interpolation (202) utilise une zone de stockage commune pour stocker les estimations de canal des sous-porteuses pilotes à la fois dans le symbole d'entrée courant et le symbole précédent associé à celui-ci sur l'axe des temps.

9.  Appareil selon la revendication 8, dans lequel le nombre de sous-porteuses de données positionnées entre les sous-porteuses pilotes adjacentes est de deux et dans lequel le tampon d'interpolation comprend trois zones de symboles.

FIG.1

FFT PROCESSOR — FFT DATA → PILOT CHANNEL ESTIMATOR ^100 → TIME DOMAIN INTERPOLATOR ^102 → FREQUENCY DOMAIN INTERPOLATOR ^104 — CHANNEL ESTIMATE → EQUALIZER

FIG.2

FIG.3

FIG.4

FIG.5

FIG.6A

TIME (SYMBOL)

N-3    N-2    N-1    N

500

k     ◯    ◉    ●    ◯ — DATA SUBCARRIER

502

k+1   ●    ◯    ⊗    ● — PILOT SUBCARRIER

k+2   ◯    ●    ◯    ◯

k+3   ◯    ◉    ●    ◯

k+4   ●    ◯    ⊗    ●

k+5   ◯    ●    ◯    ◯

FREQUENCY (SUBCARRIER)

CURRENT ESTIMATION TARGET SYMBOL

N-3    N-2    N-1    N

| | | | |
|---|---|---|---|
| 202 | m1 | m2 | m3 | m4 |

402    404    406    400

FIG.6B

START

IDENTIFY POSITION OF
CURRENT INPUT SUBCARRIER — 600
IN CURRENT INPUT SYMBOL

PILOT
SUBCARRIER OR DATA — 602    DATA SUBCARRIER
SUBCARRIER?

PILOT
SUBCARRIER — 604

STORE CHANNEL ESTIMATE OF
CURRENT PILOT SUBCARRIER
IN 4$^{th}$ SYMBOL MEMORY

IDENTIFY POSITION OF
CURRENT ESTIMATION — 612
TARGET SUBCARRIER

PROVIDE CHANNEL ESTIMATE OF — 606
PREVIOUS PILOT SUBCARRIER
ASSOCIATED WITH CURRENT PILOT
SUBCARRIER FROM 1$^{st}$ SYMBOL
MEMORY TO INTERPOLATOR

PILOT
SUBCARRIER OR DATA — 614    DATA SUBCARRIER
SUBCARRIER?

PILOT
SUBCARRIER

PERFORM LINEAR INTERPOLATION — 608
FOR CURRENT ESTIMATION TARGET
DATA SUBCARRIER TO OUTPUT
GENERATED CHANNEL ESTIMATE

OUTPUT CHANNEL — 616
ESTIMATE OF PILOT
SUBCARRIER STORED IN
CURRENT ESTIMATION
TARGET SUBCARRIER
POSITION OF 2$^{nd}$
SYMBOL MEMORY

OUTPUT CHANNEL — 618
ESTIMATE OF DATA
SUBCARRIER STORED IN
CURRENT ESTIMATION
TARGET SUBCARRIER
POSITION OF 2$^{nd}$
SYMBOL MEMORY

PERFORM LINEAR INTERPOLATION — 610
FOR NEXT ESTIMATION TARGET
DATA SUBCARRIER AND STORE
GENERATED CHANNEL ESTIMATE
IN 3$^{rd}$ SYMBOL MEMORY

END

FIG.7

TIME (SYMBOL)

N-4    N-3    N-2    N-1

500

k ⬤ ◯ ◌ ⬤ — PILOT SUBCARRIER

k+1 ◯ ⬤ ◯ ◯ — DATA SUBCARRIER

k+2 ◯ ◯ ⬤ ◯

k+3 ⬤ ◯ ◌ ⬤

k+4 ◯ ⬤ ◯ ◯

k+5 ◯ ◯ ⬤ ◯

CURRENT ESTIMATION
TARGET SYMBOL

FREQUENCY
(SUBCARRIER)

N-4→N-1    N-3    N-2

202

| m1 | m2 | m3 |

700    702    704

FIG.8A

FIG.8B

START

IDENTIFY POSITION OF
CURRENT INPUT SUBCARRIER
IN CURRENT INPUT SYMBOL ⟶ 800

802
PILOT
SUBCARRIER OR DATA
SUBCARRIER? ⟶ DATA SUBCARRIER

PILOT
SUBCARRIER

804
PROVIDE CHANNEL ESTIMATE
OF PREVIOUS PILOT SUBCARRIER
ASSOCIATED WITH CURRENT PILOT
SUBCARRIER FROM 1st SYMBOL
MEMORY TO INTERPOLATOR

806
PERFORM LINEAR INTERPOLATION
FOR CURRENT ESTIMATION TARGET
DATA SUBCARRIER TO OUTPUT
GENERATED CHANNEL ESTIMATE

808
PERFORM LINEAR INTERPOLATION
FOR NEXT ESTIMATION TARGET
DATA SUBCARRIER AND STORE
GENERATED CHANNEL ESTIMATE
IN 3rd SYMBOL MEMORY

810
STORE CHANNEL ESTIMATE OF
CURRENT PILOT SUBCARRIER
IN 1st SYMBOL MEMORY

IDENTIFY POSITION OF
CURRENT ESTIMATION
TARGET SUBCARRIER ⟶ 812

814
PILOT
SUBCARRIER OR DATA
SUBCARRIER? ⟶ DATA SUBCARRIER

PILOT
SUBCARRIER

816
OUTPUT CHANNEL
ESTIMATE OF PILOT
SUBCARRIER STORED IN
CURRENT ESTIMATION
TARGET SUBCARRIER
POSITION OF 2nd
SYMBOL MEMORY

818
OUTPUT CHANNEL
ESTIMATE OF DATA
SUBCARRIER STORED IN
CURRENT ESTIMATION
TARGET SUBCARRIER
POSITION OF 2nd
SYMBOL MEMORY

END

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BATARIERE M.D. et al.** Lower-complexity Technique to Increase Capacity of Mobile Broadband Systems. *Vehicular Technology Conference,* 2004
- *VTC 2004-Spring: 2004-IEEE 59th Milan, Italy,* 17 May 2004
- *IEEE,* 17 May 2004, vol. 4, 1939-1943

- **SPEED M. et al.** Broadband Transmission Using OFDM: System Performance and Receiver Complexity. *Broadband Communications,* 1998
- *Accessing, Transmission, Networking, Proceedings,* 17 February 1998
- *IEEE,* 17 February 1998, 99-104